Europäisches Patentamt

European Patent Office

Office européen des brevets

(19)

(11) **EP 1 001 346 A2**

(12) **EUROPEAN PATENT APPLICATION**

(43) Date of publication:
**17.05.2000 Bulletin 2000/20**

(51) Int Cl.⁷: **G06F 13/00**, G06F 13/38

(21) Application number: **99308127.2**

(22) Date of filing: **14.10.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.10.1998 KR 9843358**

(71) Applicant: **Samsung Electronics Co., Ltd.
Suwon-city, Gyungki-do (KR)**

(72) Inventor: **Shin, Hyun-kuk
Suwon-city, Kyungki-do (KR)**

(74) Representative: **Brandon, Paul Laurence et al
APPLEYARD LEES,
15 Clare Road
Halifax HX1 2HY (GB)**

(54) **Method and apparatus for transmitting digital signals over an optical cable**

(57)    A method for converting a parallel digital signal into a serial digital signal and transmitting the same over an optical cable (8, 31, 32). The method includes coding the N-bit parallel digital signal into an (N+1)-bit parallel digital signal in which the number of inversions between neighboring bits is highest. The coded (N+1)-bit parallel digital signal is converted into a serial digital signal. The converted serial digital signal is then converted into a light signal. Then, the converted light signal is transmitted over the optical cable. A corresponding apparatus is also disclosed.

FIG. 1

**Description**

The present invention relates to a method and apparatus for transmitting digital signals, and more particularly, to a method and apparatus for converting a parallel digital signal into a serial digital signal and transmitting the same over an optical cable.

In transmitting digital signals to a relatively distant area, the use of a conventional cable causes a voltage drop in a signal being transmitted due to line resistance of the cable. Thus, line drivers for compensating for the voltage drop are necessary. Also, in the case of transmitting a parallel digital signal, since multiple channels are necessary, a large amount of materials for transmission cables are required. Accordingly, it has been proposed a method of converting a parallel digital signal into a serial digital signal and transmitting the same over an optical cable.

However, when a digital signal is transmitted over an optical cable, as a period over which the level of the signal is kept constant becomes longer, that is, as the number of DC components increases, errors in receiving the signal in a receiving apparatus increase.

It is an aim of preferred embodiments of the present invention to provide a method and apparatus for converting a parallel digital signal into a serial digital signal and transmitting the same over an optical cable, wherein the number of DC components can be reduced while causing the transition of the signal level to occur at least once in units of a data packet even if the level of a signal to be transmitted over the optical cable is kept constant.

The present invention includes a method for converting an N-bit parallel digital signal into a serial digital signal and transmitting the same over an optical cable, characterised by comprising: (1) coding the N-bit parallel digital signal into an (N+1)-bit parallel digital signal in which the number of inversions between neighboring bits is highest; (2) converting the coded (N+1)-bit parallel digital signal into a serial digital signal; (3) converting the converted serial digital signal into a light signal; and (4) transmitting the converted light signal over the optical cable.

According to another aspect of the present invention, an apparatus for converting an N-bit parallel digital signal into a serial digital signal and transmitting the same over an optical cable includes a multiplexer for coding the N-bit parallel digital signal into an (N+1)-bit parallel digital signal in which the number of inversions between neighboring bits is highest, and converting the coded (N+1)-bit parallel digital signal into a serial digital signal; and a light signal generator for converting the converted serial digital signal into a light signal and transmitting the converted light signal over the optical cable.

Since the multiplexer of the present invention codes the N-bit parallel digital signals into the (N+1)-bit parallel digital signal, the number of DC components can be reduced while causing the level transition of the signal to occur at least once in units of a data packet, even if the level of serial digital signals to be transmitted is maintained at a constant level.

Preferably, the multiplexer includes a memory for storing the coded (N+1)-bit parallel digital signal and outputting the (N+1)-bit parallel digital signal corresponding to an input address when the N-bit parallel digital signal is input to address ports; and a parallel-to-serial converter for converting the (N+1)-bit parallel digital signal output from the memory into a serial digital signal.

Further features of the present invention are set out in the amended claims.

The present invention will become more apparent by describing in detail a preferred embodiment thereof, by way of example only, with reference to the attached drawings in which:

Figure 1 is a block diagram illustrating a digital signal transmission system according to a preferred embodiment of the present invention; and

Figure 2 is a block diagram illustrating a digital signal transmission system in the case when an N-bit parallel digital signal of the apparatus shown in Figure 1 is a video signal.

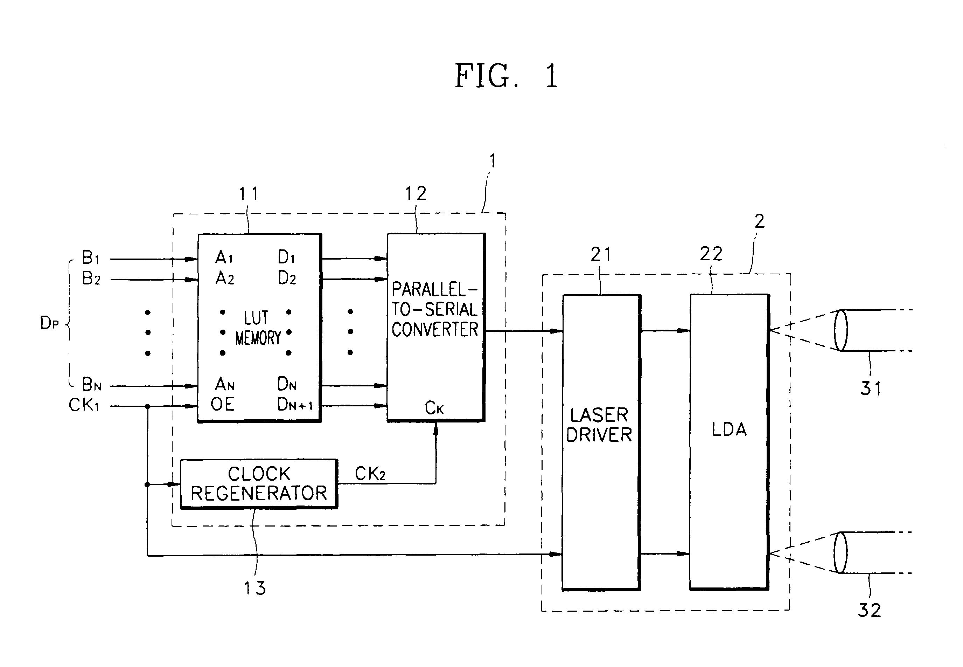

Referring to Figure 1, the digital signal transmission system according to the present invention converts an N-bit parallel digital signal $D_p$ into a serial digital signal and then transmits the same over optical cables 31 and 32. The transmission system includes a multiplexer 1 and a light signal generator 2. The multiplexer 1 codes the N-bit parallel digital signal $D_p$ into an (N+1)-bit parallel digital signal in which the number of inversions between neighboring bits is highest, and converts the coded (N+1)-bit parallel digital signal into a serial digital signal. The light signal generator 2 converts the serial digital signal output from the multiplexer 1 and a first clock signal $CK_1$ input together with the N-bit parallel digital signal into light signals to then be incident into the optical cables 31 and 32.

The multiplexer 1 includes a look-up table (LUT) memory 11, a parallel-to-serial converter 12 and a clock regenerator 13. The LUT memory 11 stores the coded (N+1)-bit parallel digital signal and outputs the (N+1)-bit parallel digital signal corresponding to an input address through data ports ($D_1$, $D_2$,..., $D_N$, $D_{N+1}$) when the N-bit parallel digital signal $D_P$ is input to address ports ($A_1$, $A_2$,..., $A_N$). The parallel-to-serial converter 12 converts the (N+1)-bit parallel digital signal output from the LUT memory 11 into a serial digital signal. The clock regenerator 13 generates a second clock signal $CK_2$ having a frequency of N+1 times that of the first clock signal $CK_1$ input together with the N-bit parallel digital signal $D_P$ to control the operation of the parallel-to-serial converter 12.

The light signal generator 2 includes a laser driver 21 and a laser diode array (LDA) 22 which is a laser generator. The laser driver 21 generates a driving signal corresponding to the serial digital signal output from the multiplexer 1. The LDA 22 generates laser light signals by the driving signal of the laser driver 21. The light signals generated in the LDA 22 are incident into the corresponding optical cables 31 and 32 to then be transmitted.

In the case when the N-bit parallel digital signal $D_P$ is a 8-bit signal, the coding algorithm for setting 9-bit data to be stored in the LUT memory 11 will now be described.

First, a 9-bit data stream whose level transition between neighboring bits is most frequent is selected. In other words, among 9-bit data streams, a first data stream having 4 logic high values, i.e., 4 1's, and 5 logic low values, i.e., 5 0's and a second data stream having 5 logic high values, i.e., 5 1's, and 4 logic low values, i. e., 4 0's, are selected. Among 9-bit binary numbers, the number of cases in which there are 4 1's and 5 0's is equal to $\frac{9!}{(4!) \cdot (5!)}$ .In other words, among 9-bit data streams, the number of first data streams having 5 1's and 4 0's is 126. Therefore, since the number of cases of 8-bit data streams is 256, four 3rd data streams are coded with them being included in the first and second data streams. The four 3rd data streams are selected from the data having 3 1's and 6 0's and-to-or the data having 6 1's and 3 0's. For example, the third data streams are (100100100), (100010100), (001001001) and (011101011). The 3rd data streams can be set twice in units of packets, thereby further increasing the occurrence of level transition. In other words, the 3rd data streams are set to a pair of data streams having the same amplitude in DC components and the opposite symbols, and are then alternately used in units of packets. For example, one of the 3rd data streams is set to a pair of {(100100100) and (110110110)} to then be alternately output in units of packets with respect to the corresponding to 8-bit data.

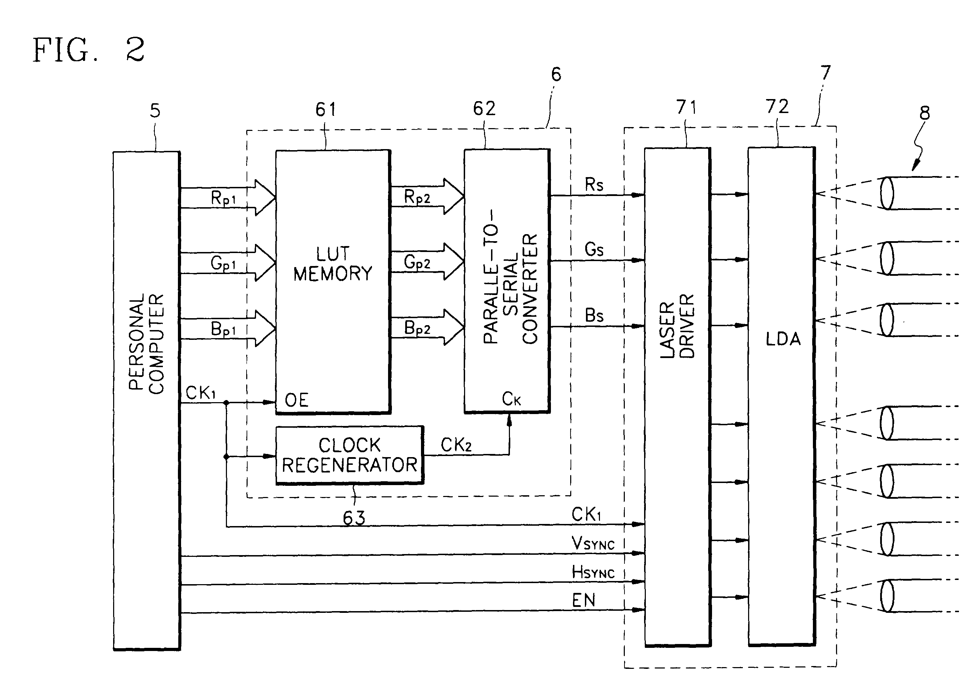

Figure 2 is a digital signal transmission apparatus in the case when the N-bit parallel digital signal of the apparatus shown in Figure 1 is a video signal.

Referring to Figure 2, a personal computer 5 outputs 8-bit parallel video signals $R_{P1}$, $G_{P1}$ and $B_{P1}$, a first clock signal $CK_1$, a vertical sync signal $V_{sync}$, a horizontal sync signal $H_{sync}$ and an enable signal EN. A LUT memory 61 included in a multiplexer 6 stores coded 9-bit parallel video signals $R_{p2}$, $G_{p2}$ and $B_{p2}$, and outputs the same corresponding to input addresses through data ports when the 8-bit parallel video signals $R_{P1}$, $G_{P1}$ and $B_{P1}$ are input to address ports. A parallel-to-serial converter 62 converts the 9-bit parallel video signals $R_{P2}$, $G_{P2}$ and $B_{P2}$ into serial video signals $R_s$, $G_s$ and $B_s$. A clock regenerator 63 generates a second clock signal $CK_2$ having a frequency of 9 times that of the first clock signal $CK_1$ input together with the 8-bit parallel digital signals $R_{P1}$, $G_{P1}$ and $B_{P1}$ to control the operation of the parallel-to-serial converter 62.

A laser driver 71 included in a light signal generator 7 generates driving signals corresponding to the serial digital video signals $R_s$, $G_s$ and $B_s$ output from the multiplexer 6, the first clock signal $CK_1$ the vertical sync signal $V_{sync}$, the horizontal sync signal $H_{sync}$ and the enable signal EN, which are output from the personal computer 5. A laser diode array (LDA) 72 generates laser light signals by the driving signals of the laser driver 71. The light signals generated in the LDA 72 are incident into the corresponding optical cables 8 to then be transmitted to a receiving apparatus positioned at a monitor. The receiving apparatus restores the modified signals transmitted from the transmission apparatus into original signals and applies the same into the monitor.

As described above, according to preferred embodiments of the present invention, the method and apparatus for converting a parallel digital signal into a serial digital signal and transmitting the same over an optical cable, can reduce DC components while causing the level transition of a signal at least once in units of packets even if the level of a digital signal to be transmitted is kept constant. Thus, signal reception errors of a receiving apparatus can be reduced and reception performance of low frequency signals can be enhanced.

Various changes and modifications may be made by those skilled in the art which do not go beyond the spirit and scope of the invention as defined in the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

**Claims**

1. A digital signal transmission method for converting an N-bit parallel digital signal into a serial digital signal and transmitting the same over an optical cable, characterized by comprising:

(1) coding the N-bit parallel digital signal into an (N+1)-bit parallel digital signal in which the number of inversions between neighboring bits is highest;

(2) converting the coded (N+1)-bit parallel digital signal into a serial digital signal;

(3) converting the converted serial digital signal into a light signal; and

(4) transmitting the converted light signal over the optical cable.

2. The digital signal transmission method according to claim 1, wherein the N-bit parallel digital signal is a 8-bit parallel digital signal, and the coding step (1) includes the sub-steps of:

(1-1) coding 126 data streams of the 8-bit parallel digital signal so as to corresponding to the data having four logic high values of '1' and five logic low values of '0' among 9-bit data;

(1-2) coding another 126 data streams of the 8-bit parallel digital signal so as to corresponding to the data having five logic high values of '1' and four logic low values of '0' among 9-bit data; and

(1-3) coding 4 data streams of the 8-bit parallel digital signal so as to correspond to the data having three logic high values of '1' and six logic low values of '0' among 9-bit data.

3. The digital signal transmission method according to claim 2, wherein the step (1-3) includes coding each of the 4 data steams into a pair of data streams of the 8-bit parallel digital signal, to then be alternately used in units of packets.

4. A digital signal transmission apparatus for converting an N-bit parallel digital signal into a serial digital signal and transmitting the same over an optical cable, characterized by comprising:

a multiplexer (1-6) for coding the N-bit parallel digital signal into an (N+1)-bit parallel digital signal in which the number of inversions between neighboring bits is highest, and converting the coded (N+1)-bit parallel digital signal in-

to a serial digital signal; and

a light signal generator (2,7) for converting the converted serial digital signal into a light signal and transmitting the converted light signal over the optical cable (8, 31, 32).

5. The digital signal transmission apparatus according to Claim 4, wherein the multiplexer comprises:

a memory (11, 61) for storing the coded (N+1)-bit parallel digital signal and outputting the (N+1)-bit parallel digital signal corresponding to an input address when the N-bit parallel digital signal is input to address ports; and

a parallel-to-serial converter (12, 62) for converting the (N+1)-bit parallel digital signal output from the memory into a serial digital signal.

6. The digital signal transmission apparatus according to Claim 5, wherein the multiplexer further comprises a clock regenerator (13, 63) for generating a clock signal having a frequency N+1 times that of another clock signal input together with the N-bit parallel digital signal to control the operation of the parallel-to-serial converter.

7. The digital signal transmission apparatus according to any one of Claims 4 to 6, wherein the N-bit parallel digital signal is each video signal for red, green and blue.

8. The digital signal transmission apparatus according to any one of Claims 4 to 7, wherein the light signal generator comprises:

a laser driver (21, 71) for generating a driving signal corresponding to the serial digital signal output from the multiplexer; and

a laser diode array (22, 72) for generating laser light signals by the driving signal of the laser driver.

## FIG. 1

FIG. 2